# EUROPEAN PATENT APPLICATION

(11) **EP 4 407 446 A1**
(43) Date of publication of application: **31.07.2024**
(21) Application number: 23153094.0
(22) Date of filing: 24.01.2023
(51) Int. Cl.: G06F 8/71, G05B 19/042

(54) **ENGINEERING IN A PROCESS CONTROL SYSTEM**

(71) Applicant: ABB SCHWEIZ AG, 5400 Baden (CH)
(72) Inventor: THILDERKVIST, Hans, 214 37 Malmö (SE); KARLEKAR, Sunil, 560048 Karnataka (IN); HAGBERG, Ulf, 224 68 Lund (SE); JESKE, Ralf, 32469 Petershagen (DE); JETLEY, Raoul, 560048 Karnataka (IN)
(74) Representative: Kransell & Wennborg KB

(57) **Abstract**

An engineering server (17) of a process control system comprises at least one processor operable to provide a group of engineering services of an engineering services platform (61), which group comprises at least one engineering directory service (62) and at least one group of model services (66, 72), where each engineering directory service (62) provides at least one object (64) of a type corresponding to a type of process control equipment and each model service (66, 72) provides a function operating on an object (64) provided by a corresponding engineering directory service (62) and allowing a user to configure the corresponding function, wherein the model services (66, 72) and the engineering directory service (62) are realized as microservices and each model service (66, 72) communicates with the corresponding engineering directory service (62) via a corresponding point-to-point connection and stores configurations made by the user in a source file store (18) for being implemented as configurations of real functions in a runtime system of the process control system operating on process control equipment.

## Description

### TECHNICAL FIELD

The invention relates to an engineering server, a method, a computer program and computer program code for providing configurations for real functions of a runtime system of a process control system as well as to a process control system comprising an engineering system with such an engineering server.

### BACKGROUND

A process control system may provide a runtime system in which automated control and operation of an industrial process is made. The runtime system may combine the following functions: human machine interface (HMI), control logic execution, historian, alarm management, etc. To efficiently configure and maintain control in the runtime system, a highly integrated engineering system may be provided in which real world objects like Tank, Motor, Valve etc. are digitally represented as Objects, where real world objects are monitored and controlled by the runtime system. A combination of these Objects is used for asset management, production management or any other processes that requires control and monitoring.

The various functions associated with these Objects may be digitally represented as Models. Examples of Models are:
- Control Logic, to define the control algorithms to be executed for the associated Object. Control logic receives inputs from and sends output commands to I/O devices.
- I/O Devices, representing the physical devices (transmitters and actuators) that convert physical measurements to digital input signals, and digital output signals to physical actions.
- HMI Models, to provide visual representation of the underlying process through plant overview graphics, trend charts, alarms, and events. These visual representations help an Operator or Supervisor to take necessary actions to control and monitor a plant.

Each of these Models on an object in a runtime system must be configured before being applied and executed. This is done using Engineering tools and editors. These engineering tools and editors, along with supporting services, form an engineering system of the process control system. The services which control and monitor the plant are the runtime services. The runtime services together form a runtime system.

In some contemporary process control systems, the engineering system and the runtime system is combined into a single, tightly coupled system. The configuration data is stored in a monolithic database. Due to dependencies between different models and objects, configuration changes encompassing more than a single object or model may ripple through multiple engineering tools and lead to updates of multiple configuration data items. If any of the activated tools are unresponsive or contain bugs, the operation may hang or fail, and even when it succeeds, the runtime service may be blocked during the reconfiguration transaction.

Therefore, a software change in any part of the process control system requires extensive integration tests of the entire process control system.

It is often of interest to use microservices in the runtime system. However, microservices can also be of interest in the engineering system.

US 2021/0089354 does for instance discuss the use of a micro-service control architecture that provides a modular flexible platform for designing, diagnosing, updating and/or executing process control states. Each control service also has a corresponding control service database, as well as share and maintain a standard mechanism that defines and supports common functionality applicable to all control system service instances, such as developing and estimating control services.

However, there is still room for improvement in the use of microservices in a process control system.

### SUMMARY

One objective of the invention is therefore to improve on the use of microservices in a process control system.

This objective is according to a first aspect achieved by an engineering server of an engineering system of a process control system for providing configurations for real functions of a runtime system of the process control system,
where the engineering server comprises at least one processor operable to provide a group of engineering services in an engineering services platform, the group of engineering services comprising at least one engineering directory service and at least one group of model services, where each group of model services is associated with a corresponding engineering directory service, and
where each engineering directory service provides at least one object of a type corresponding to a type of process control equipment and each model service provides a function operating on an object provided by the corresponding engineering directory service and allowing a user to configure the corresponding function,
wherein the model services and the engineering directory service are realized as microservices and each model service is operative to communicate with the corresponding engineering directory service via a corresponding point-to-point connection and to store configurations made by the user in a source file store for being implemented as configurations of real functions in the runtime system that operate on process control equipment.

The objective is according to a second aspect achieved through a method of providing configurations for real functions of a runtime system of a process control system, the process control system also comprising an engineering system, the method comprising
providing a group of engineering services in an engineering system platform of the engineering system,
the group of engineering services comprising at least one engineering directory service and at least one group of model services, where each group of model services is associated with a corresponding engineering directory service,
where each engineering directory service provides at least one object of a type corresponding to a type of process control equipment and each model service provides a function operating on an object provided by the corresponding engineering directory service and allowing a user to configure the corresponding function,
wherein the model services and the engineering directory service are realized as microservices and each model service is set to communicate with the corresponding engineering directory service via a corresponding point-to-point connection and to store configurations made by the user in a source file store for being implemented as configurations of real functions in the runtime system operating on process control equipment.

The objective is according to a third aspect achieved through a computer program for providing configurations for real functions of a runtime system of a process control system, where the computer program comprises computer program code which when executed by a processor of an engineering server according to the first aspect causes the engineering server to perform the steps of the method according to the second aspect.

The objective is according to a fourth aspect further achieved through a computer program product for providing configurations for real functions of a runtime system of a process control system, the computer program product comprising a data carrier with the computer program with computer program code according to the third aspect.

The objective is according to a fifth aspect further achieved through a process control system comprising:
a runtime system comprising a first operator terminal, a process control server and a controller, and
an engineering system comprising an engineering server according to the first aspect.

The engineering system may comprise the source file store and the source file store may be a part of the engineering services platform. The source file store may additionally be provided as a part of or separate from the engineering server.

The engineering system may additionally comprise an engineering terminal providing a number of engineering tools, each operative to cooperate with a corresponding engineering service of the engineering server.

Aspects of the present disclosure thus propose improved functions that are used in the runtime system of the process control system. The effects of any bugs triggered by configuration changes are contained within a single microservice, and thereby stopped from rippling through engineering tools and services. Thereby, a robust and stable process control system is obtained where the risk of the operation of the runtime system hanging or failing or a runtime service being blocked during reconfiguration is reduced.

According to a first variation of the first aspect, the services provided by the engineering server further comprise a deploy service configured to deploy the configurations of the functions in the runtime system.

According to a corresponding variation of the second aspect, the method further comprises providing a deploy service operable to deploy the configurations of the functions in the runtime system.

According to a second variation of the first aspect, each model service has a local store and is operative to, upon starting of a function configuration session for a user, receive data from the source file store and store it in the local store, store configurations made by the user during the function configuration session in the local store and transfer the content of the local store to the source file store at the end of the function configuration session.

According to a corresponding variation of the second aspect, each model service has a local store and receives, upon starting of a function configuration session for a user, data from a source file store and stores this data in the local store. It further stores configurations made by the user during the function configuration session in the local store and transfers the content of the local store to the source file store at the end of the function configuration session.

According to a third variation of the first aspect, a model service in the group is operative to poll the engineering directory service for changes made from other model services, receive such changes from the engineering directory service and integrate them in the local store.

According to a corresponding variation of the second aspect, the method further comprises polling by a model service in the group the engineering directory service for changes made from other model services, receiving such changes from the engineering directory service and integrating them in the local store.

According to a fourth variation of the first aspect, there are several users and each user is provided with their own engineering directory service and group of model services.

The engineering system and more particularly the engineering services platform may additionally comprise a global repository and each user may be provided with an own source file store. There may thus be one source file store provided for each user.

According to a fifth variation of the first aspect, an engineering directory service may in this case be operative to store the configurations of the corresponding group of model services in the associated source file store and the configurations of the different users may be merged into the global repository before being implemented as configurations of real functions in the runtime system.

According to a sixth variation of the first aspect, the engineering directory service is available during updates of model services in the corresponding group.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The invention will now be described in more detail in relation to the enclosed drawings, in which:
fig. 1 schematically shows a process control system including a runtime system and an engineering system comprising an engineering server and an engineering terminal,
fig. 2 shows a block schematic of the engineering terminal,
fig. 3 shows a block schematic of the engineering server,
fig. 4 shows a computer program product in the form of a CD ROM disc with computer program code used to implement an engineering services platform of the engineering server,
fig. 5 schematically shows an engineering environment comprising engineering tools and the engineering services platform with engineering services,
fig. 6 shows a flow chart of a first number of method steps in a method of providing configurations for functions of the runtime system of the process control system,
fig. 7 shows a flow chart of a second number of method steps in a method of providing configurations for functions of the runtime system of the process control system and being performed by an engineering directory service of the engineering services platform,
fig. 8 shows a flow chart of a third number of method steps in a method of providing configurations for functions of the runtime system of the process control system being performed by a first model service of the engineering services platform, and
fig. 9 schematically shows a variation of the engineering services platform provided for different users.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards a process control system and more particularly towards an engineering environment of a process control system.

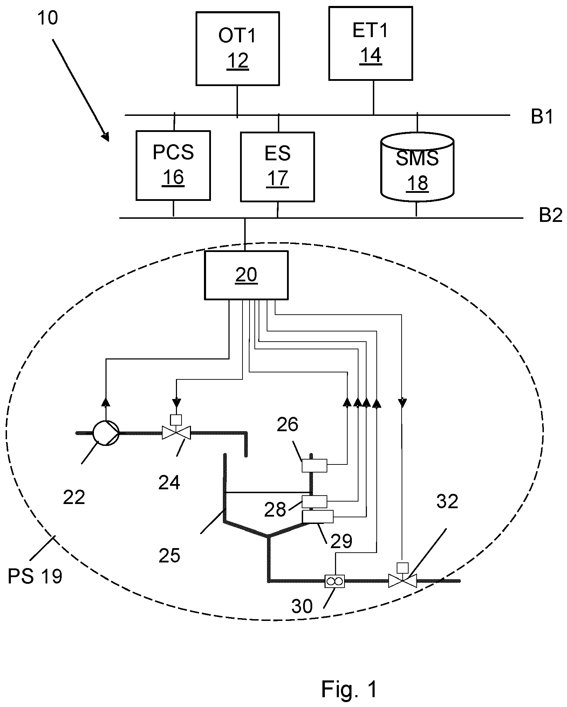

Fig. 1 schematically shows a process control system 10 for controlling an industrial process or perhaps part of an industrial process. Typical processes are electrical power generation, transmission, distribution and supply processes, water purification and distribution processes, oil and gas production and distribution processes, petrochemical, chemical, pharmaceutical and food processes, and pulp and paper production processes. These are just some examples of processes where the system can be applied. There exist countless other processes.

Normally there may in such a system be one or more controllers having some local software for controlling one or more real objects or pieces of process control equipment. The process control equipment may comprise equipment that influence or measure different properties of the technical process. A piece of process control equipment may for instance be a pump, a motor, a valve, etc. A process, or a part of a process, may be controlled via a server, which then typically communicates with a controller for providing local control. The process may be monitored through an operator terminal or workstation, which communicates with the server. In such a system there may also be an engineering terminal at which engineering of the process control system may take place.

In fig. 1 the system 10 therefore includes a first operator terminal OT1 12 and a first engineering terminal ET1 14 connected to a first bus B1. There is furthermore a second bus B2 and between the first and second busses B1 and B2 there is connected a process control server PCS 16 with a control function for controlling the process. There is also an engineering server ES 17 as well as a source file store SFS 18 connected between the first and the second buses B1 and B2. To the second bus B2 there is furthermore connected a controller 20 (Process Controller or Programmable Logic Controller (PLC)) for providing local control in the system 10. The process control server 16, the controller 20 and possibly also the first operator terminal 12 may be seen as being a part of a runtime system of the process control system, while the first engineering terminal 14, the engineering server 17 and the source file store 18 may be seen as being part of an engineering system of the process control system.

In the figure there is only provided one controller 20. It should however be realized that there may be several more controllers in the system 10. The controller 20 is connected to one or more pieces of process control equipment. As an example, the controller 20 is shown as being connected to process control equipment in a process section PS 19 of the process control system for controlling a process control flow through at least a part of the industrial process, which process section 19 includes a first inlet pipe leading to a tank 25 and a second outlet pipe leaving the tank 25. In the first pipe there is provided a pump 22 that pumps fluid into the first pipe as well as a first valve 24. In the tank 25 there are provided two level sensors 26 and 28 and in the outlet pipe there is provided a flow meter 30 and a second valve 32. There is also a temperature sensor 29 in the tank 25. The pipes, tank, valves and sensors are examples of process control equipment or real-world objects being controlled by the runtime system.

The level sensors 26 and 28 measure the physical quantity liquid volume, the temperature sensor measures the physical quantity liquid temperature and the flow meter 30 measures the physical quantity volumetric flow rate of the liquid. The controller 20 may receive control input values from the pump 22, level sensors 26 and 28 and temperature sensor 29 and regulate the liquid level in the tank 25 based on these control input values through controlling the first valve 24. It also receives control input values from the flow meter 30 and temperature sensor 29 and controls the second valve 32 for regulating the output fluid flow.

The above-described control is merely an example of one type of control in a process control example. It should be realized that several different other types of control are possible and that several other types of physical quantities can be measured. The above-described process control equipment are therefore also merely examples of process control equipment that can be used.

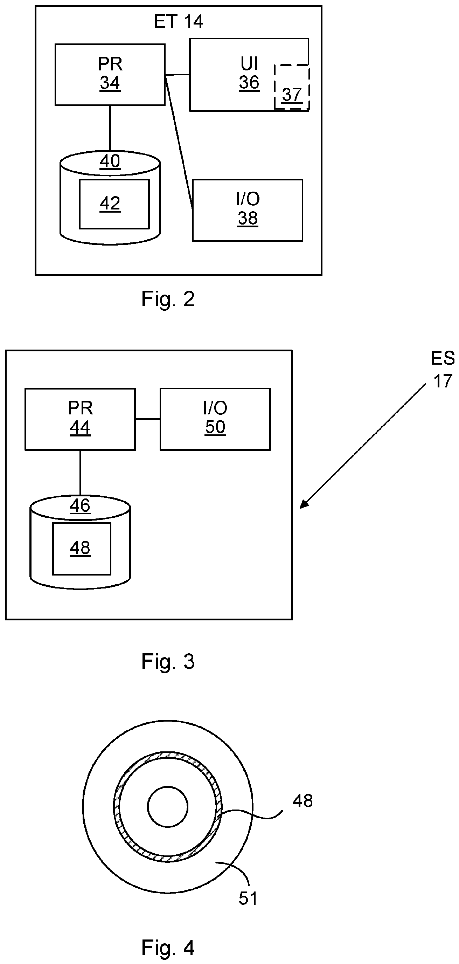

Fig. 2 schematically shows one realization of the first engineering terminal ET 14. There is a processor PR 34 and a data storage 40 with computer program instructions 42 that, when executed by the processor 34, implements an engineering tools platform comprising one or more engineering tools. There is also an input/output (I/O) interface 38 for communication with other entities in the process control system and especially for communicating with the engineering server 17 and possibly also with the source file store 18. Finally, there is a user interface UI 36 which comprises one or more screens 37 for displaying information about objects, object types and models used to implement functions to a user. A screen 37 may be a touch screen allowing the user to input data and commands as well as to move a pointer or to select objects in different screens. It should be realized that the user interface 36 may also or instead comprise other means of allowing user input, such as a mouse or trackball, a keyboard or a keypad.

Fig. 3 schematically shows one realization of the engineering server ES 17. There is a processor PR 44 and a data storage 46 with computer program instructions or computer program code 48 that, when executed by the processor 44, implements a number of engineering services of an engineering services platform. There is also an input/output (I/O) interface 50 for communication with the first engineering terminal 14 and with the source file store 18. It may also be used for communication with operator terminal 12, the process control server 16 and the controller 20.

The engineering server 17 may thus be provided in the form of a processor 44 with associated program memory 46 including computer program code 48 for implementing the engineering services of the engineering services platform.

A computer program may also be provided via a computer program product, for instance in the form of a computer readable storage medium or data carrier, like a CD ROM disc or a memory stick, carrying such a computer program with the computer program code, which will implement the engineering services platform when being loaded into a processor. One such computer program product in the form of a CD ROM disc 51 with the above-mentioned computer program code 48 is schematically shown in fig. 4.

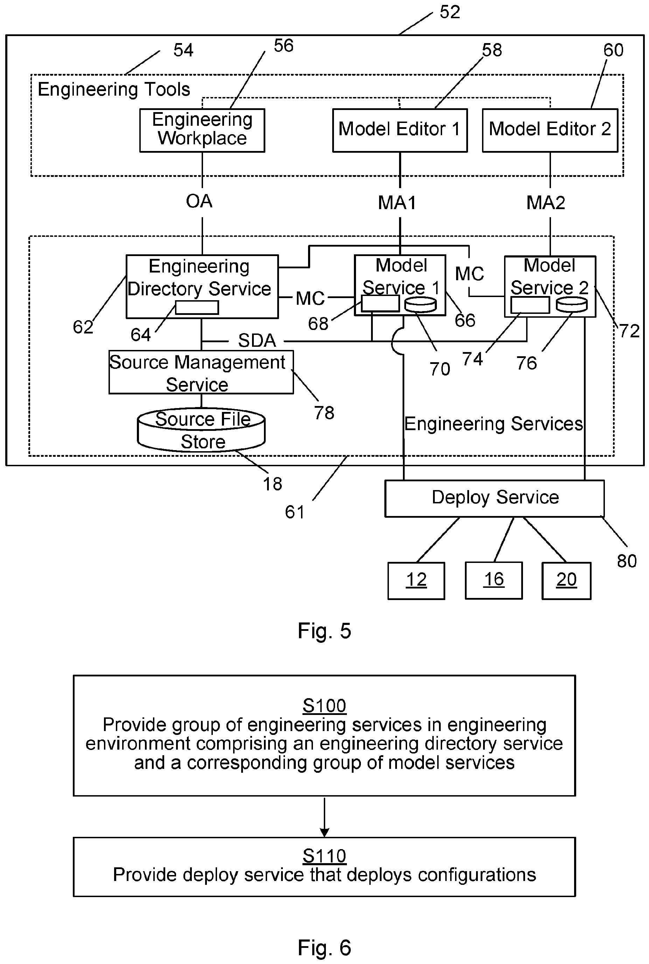

Fig. 5 schematically shows an engineering environment 52 provided by the engineering system, which engineering environment 52 comprises an engineering tools platform 54 comprising a number of engineering tools as well as an engineering services platform 61 comprising a number of engineering services. The engineering tools of the engineering tools platform 54 comprise an engineering workplace 56 for modifying objects and object types representing various types of process control equipment. There is also a first model editor 58 for configuring a first model service and a second model editor 60 for configuring a second model service.

The engineering services in the engineering services platform 61 comprise an engineering directory service (EDS) 62, a first model service 66 and a second model service 72, where the EDS 62 comprises an object model 64, the first model service 66 comprises a first model data model 68 and a first local data store 70 and the second model service 72 comprises a second model data model 74 and a second local data store 76. There is also a source management service (SMS) 78 in the engineering services platform 61as well as the previously mentioned source file store 18, where the SMS 78 is connected to the source file store 18. In the figure there is finally a deploy service 80 configured to deploy configurations into the runtime system. For this reason, the deploy service 80 communicates with the first operator terminal 12, the process control server 16 as well as with the first controller 20.

The deploy service 80 may be implemented in the engineering server 17. However, it should be realized that it can be provided in any suitable computer in the process control system.

The engineering environment 52 thus comprises an engineering tools platform 54 comprising Engineering Tools and an engineering services platform 61 comprising Engineering Services, which services are implemented as microservices.

Microservices based architecture is an approach to building a server application as a set of small services. Each service runs in its own process and communicates with other services using standard protocols and well-defined interfaces (contracts). Each microservice implements a specific end-to-end domain or business capability within a certain context boundary. Each microservice owns its related domain data model and domain logic (sovereignty and decentralized data management). Microservices based architecture enables better maintainability in complex, large, and highly scalable systems having many independently deployable services that each have granular and autonomous lifecycles. Microservices can also scale out independently. One can just scale the functional area that needs more processing power or network bandwidth to support demand.

The Engineering tools of the engineering tools platform 54 use the services but don't maintain any local data. A core set of infrastructure ("middleware") services provide shared system functions to other services (e.g., for access control). The process control system functions mentioned in the introduction are supported by Model Services, each providing the configuration capabilities for a specific function. The model configuration data is engineered using Model Editors that collaborate directly with the Model Services.

In the example of fig. 5, the first model editor 58 collaborates with the first model service 66 and the second model editor 60 collaborates with the second model service 72, each via a corresponding interface named ModelAccess1 and ModelAccess2.

The engineering environment 52 has an information model in which the basic building blocks are objects and models and for each there is the concept of instances and types. An object corresponds to a piece of process control system equipment and can be of a certain type corresponding to the type of equipment. As an example, there may be a process control object of the type valve corresponding to the process control equipment 24 in fig. 1, which is a real valve.

The objects and object types are provided by the EDS 62 as object models, where one such object model 64 representing an object such as the valve 24 is indicated in fig. 5. The EDS 62 is responsible for managing the configuration data for the "object level" of the information model. This means that it maintains all objects and object types, with their names and identifiers, their references to each other, and the configurable structures that organize objects hierarchically.

The EDS provides methods for creation, deletion and modification of objects via an ObjectAccess (OA) interface and methods for creation, deletion and modification of object types via an ObjectTypeAccess interface.

A user may then use the engineering workplace 56 and create (instantiate) an object from an object type. As can be seen above, the object type may be provided by the EDS 62 for the engineering workplace 56 . The user can then create (instantiate) the object via the engineering workplace 56 via the OA interface and thereafter the created object may be stored by the EDS 62 as an Object Model 64.

An Object Type is composed of a set of Model Types, each corresponding to a "function" such as Control, I/O, or an HMI function. An Object is defined by one or more object types (multiple inheritance). It has one Model (instance) for each Model Type of the defining object type(s).

For each created object, there is provided a corresponding group of model services that match the model types of the object type. As an example, the first model service 66 and the second model service 72 corresponding to the created object model 64 are provided, where the first model service 66 corresponds to a first model type and the second model service 72 corresponds to a second model type. The first model service more particularly corresponds to a first type of function for the created object and the second model service corresponds to a second type of function for the created object.

The user can then configure a first and a second function, which functions are provided via the first model data model 68 and the second model data model 74, using the first and second model services 66, 72. The configurations are then carried out from the first and second model editors 58,60 via the ModelAccess1 and ModelAccess2 interfaces (MA1, MA2).

The EDS 62 runs a consistency check based on rules defined in the information model. All inconsistencies are flagged which the model services should correct. This normally requires user interactions through the Model Editors.

The Model Services 66, 72 collaborate with the EDS 62 to add and configure models. Model services never collaborate with each other directly: the EDS 62 and each model service 66, 72 interact point-to-point via an interface called ModelCoordination (MC) to synchronize object and model configuration data. Thus, different Model Services can add and update different models on the same objects without interfering with each other.

After the user is finished configuring a function, the configurations are stored in the corresponding local store. In the example given above the configurations of the first function are stored in the local data store 70 of the first model service 66 and the configurations of the second function are stored in the local data store 76 of the second model service 72.

Eventually all configurations will be fetched from the different model services to the SMS 78, which stores them in the source file store 18. The first and second model services 66, 72 thus sends the configurations of the first and the second function to the SMS 78 in response to requests from the SMS 78 via a common SourceDataAccess (SDA) interface, which then stores them in the source file store 18.

When the configurations are to be deployed to the runtime services, the deploy service 80 fetches the configurations from the model services 66, 72 and applies them on corresponding functions in the runtime environment.

Configurations for an HMI function may for instance be applied to the first operator terminal 12, while configurations for control logic functions and/or alarms may be sent to the process control server 16 or to the controller 20. Alarm configurations may also be made in the first operator terminal 12.

As can be seen in fig. 6, which shows a flow chart of a number of method steps in a method of providing configurations for real functions of the runtime system of the process control system, the engineering server 17 provides an engineering services platform comprising a group of engineering services in the engineering environment, S100, which group of engineering services comprises at least one engineering directory service and at least one group of model services, where each group of model services is associated with a corresponding engineering directory service where each engineering directory service provides at least one object of a type corresponding to a type of process control equipment and each model service provides a function for operation on a piece of process control equipment corresponding to an object provided by the corresponding engineering directory service and allowing a user to configure the corresponding function, wherein the model services and the engineering directory service are realized as microservices and each model service is set or operative to communicate with the corresponding engineering directory service via a corresponding point-to-point connection (MC interface) and to store configurations made by the user in the source file store 18 for being implemented as configurations of real functions in the runtime system of the process control system that operate on process control equipment.

The engineering server 17 also provides the deploy service 80, which deploy service 80 is operable to deploy the configurations and functions in the runtime system of the process control system, S110.

The EDS acts as an orchestrator sending commands to all the different model services for large-context operations like opening and saving of projects, but for all regular engineering changes performed via tools and editors, the model services will poll the EDS for changes and do a ModelCoordination synchronization when needed.

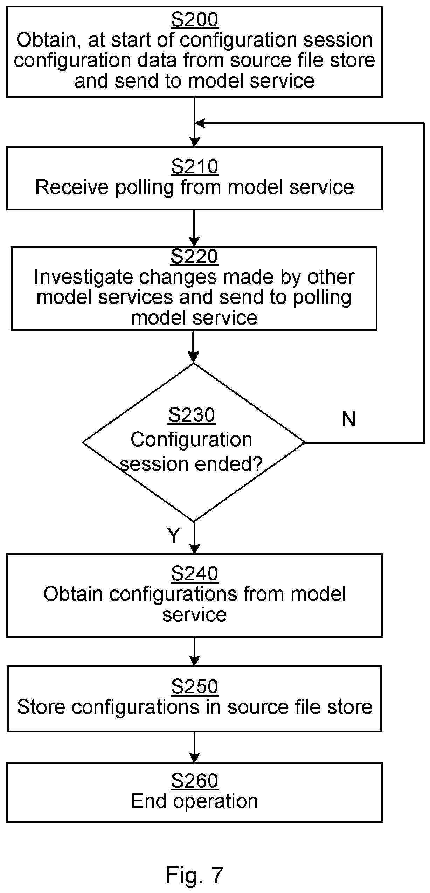

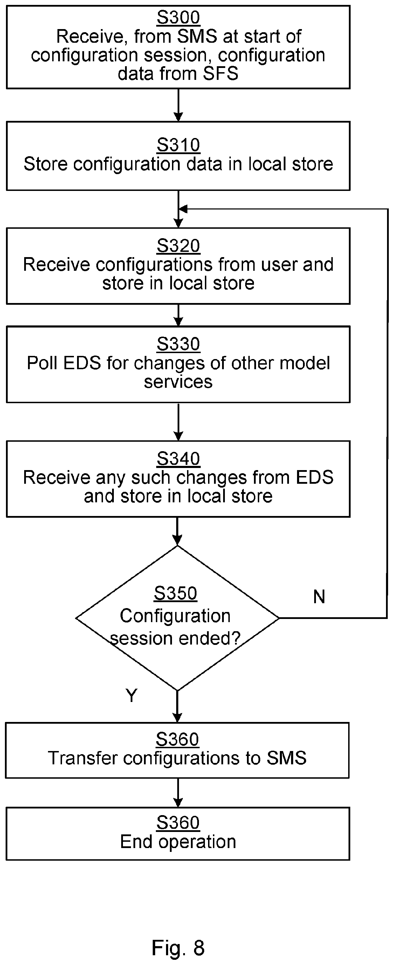

One example of how this may be done will now be discussed in an example only involving the EDS 62 and the first model service 66. The principles outlined here can be applied to all model services that are linked to the EDS 62. Furthermore, these details will also be discussed with reference being made to fig. 7, which shows a number of steps performed by the EDS 62 and SMS 70, and to fig. 8, which shows a number of steps being performed by the first model service 66.

The operation may be linked to the starting of a function configuration session, which may involve the configuration of one or more functions by one or more users of the engineering environment.

At the beginning of the session, the SMS 78 obtains configuration data from the source file store 18 and sends it to the first model service 66 via the SDA interface, S200. It should here be realized that this step would not be performed if the object with which the configuration data is associated is created during the session. Put differently, the method step is only performed if there are configurations associated with a previously created object in the source file store 18.

The first model service 66 thereby also receives the configuration data of the source file store 18 from the SMS 78 via the SDA interface, S300. It then continues and stores the configuration data in the local store 70, S310.

A first user at the first engineering terminal 14 may now provide configurations for a first function associated with the first model service 66, which configurations are being made from the first model editor 58 via the MA1 interface. In this way the first model service 66 receives configurations from the first user and these configurations are stored in the local store 66, S320.

The first model service 66 may also poll the EDS 62 for changes made in other model services or the engineering workplace 56, S330, which polling may be performed via the individual MC interface between the first model service 66 and the EDS 62.

The EDS 62 may thus receive a polling from the first model service 66 via the dedicated MC interface, S210.

When receiving such a polling from the first model service 66, the EDS 62 now investigates if there are any changes to its configuration data that have not yet been fetched and consumed by the model service, which could be the case if any of the other associated model services or a workplace tool have made changes. The EDS responds with a list of all such changes to the first model service 66 via the corresponding MC interface, S220. The first model service 66 then receives the changes, processes and integrates them into its local store, S340, and optionally also confirms via ModelCoordination to the EDS 62 that the change is consumed.

The EDS 62 then investigates if the configuration session is ended, and if it is not, S230, it continues and waits for polling.

When this has been done, the first model service 66 also investigates if the configuration session is ended. If it is not, S350, then the first model service 66 returns and waits for configurations from the first user, S320.

If the configuration session is ended, S350, or a save to the source file store 18 is triggered from the Workplace 56, the SMS 78 fetches the configuration data from all connected model services via the SDA interface, to obtain the most recent version from their local stores. In this way, the SMS 78 obtains the configuration data from the model service 66, S240, which may involve the model service transferring the configurations to the SMS 78, S360. Thereafter the SMS 78 stores the configuration updates in the source file store 18, S250.

The receiving of configurations from the model services may involve receiving configurations from all associated model services for storage in the source file store 18.

Put differently, every model service has its own data store. Here, the data is represented in a "private" data model adapted to the model service's function. This data store is synchronized with the source file store 18 via the SMS 78 on open and save of projects. The model services 66, 72 receive data from the SMS 78 on opening of a project and send data to the SMS 78 on saving of the project. The data in the shared source file store 18 is the master data. The data stores 70, 76 of the model services 66, 72 can be regarded as caches and are used for faster loading of projects. This is different from traditional microservices where data is stored and owned by the corresponding service. By "tunneling" the model data through the SMS 78 to the shared and consolidated source file store 18, this store 18 can easily be used for backup management.

Each model service thus has a local store and is operative to, upon starting of a function configuration session for a user, receive data from the source file store via the corresponding engineering directory service and store the data in the local store, store configurations made by the user during the function configuration session in the local store and transfer the content of the local store to the source file store at the end of the function configuration session. Furthermore, a model service in the group is operative to poll the engineering directory service for changes made from other model services, receive such changes from the engineering directory service and integrate them in the local store.

The engineering environment also employs eventual consistency. Eventual Consistency is a paradigm in which availability is given a higher priority than response time. In the engineering system, the EDS 62 is always available, and engineering can be done even if some model services are unresponsive or temporarily unavailable. Once a model service has started and is active but not busy, it polls the EDS 62 for changes performed from other model services and tools. If any change is detected, the changed models are fetched and integrated into the Model Data store.

The EDS 62 is a critical service and should always be running which is again different than a traditional microservices architecture, where other services can continue servicing even if any service is down.

The EDS 62 will ensure that the engineering system will become eventually consistent. There is a probability that the engineering system is partly inconsistent for periods of time, unlike distributed databases where inconsistencies are never exposed to the outer world. During an update transaction, accesses are blocked for a maximum time of some seconds. Here, the inconsistency lasts till all the model services are up and running and have had time to synchronize with the EDS.

Thus, the engineering directory service must be available during updates of model services in the corresponding group of model services.

The set of model services and model editors is extensible. An actual engineering system may include a specific set of model services, defined by DCS product profile, version, and end-user selection. Normally, a model service and model editor pair are added for each process control function.

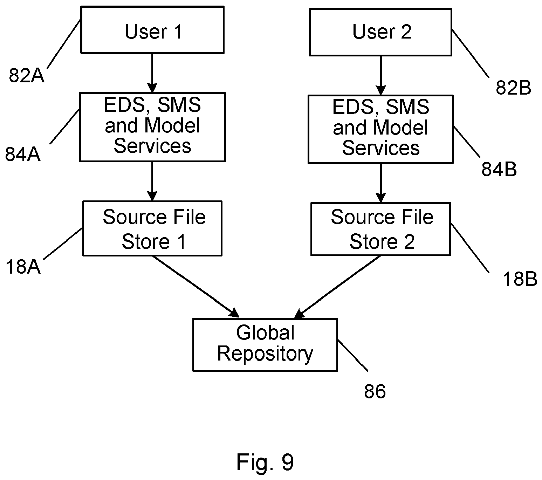

Another possible variation is that every user gets their own set of microservice instances when the engineering system is launched, meaning that there is one EDS and one SMS on top of a source file store 18, and one full set of Model Services for each active user. One example of this is shown in fig. 9. For a first user 82A there is a first EDS, a first SMS and a corresponding first group of Model services 84A, such as the previously mentioned first and second model services. The first SMS then stores the configurations of the first group of model services in a first source file store 18A provided for the first user. In a similar manner, there is a second EDS, a second SMS and corresponding second group of model services 84B for a second user 82B. The second SMS stores the configurations of the second group of model services in a second source file store 18B. The merge of engineering data between users is handled through a merge from the source file stores 18A, 18B to a global repository 86. The global repository 86 may be provided in the engineering services platform of the engineering environment.

This realization is different than traditional microservices where the services are responsible for a function and caters to multiple concurrent users. This realization may additionally be necessitated because of the shared data store and its connection to a version control system (different users shall not be able to overwrite and destroy each other's changes).

There may thus be several users with one engineering directory service, an source file store and a group of model services provided for each user. Each user may thus be provided with an own engineering directory service and an own group of associated model services as well as an own source file store. An engineering directory service is then operative to store the configurations of the corresponding group of model services in the associated source file store and the configurations of the different users are merged into a global repository before being implemented as configurations of real functions in the runtime system.

Aspects of the present disclosure propose improved functions that are used in the runtime system of the process control system. Configuration changes that contain bugs are stopped from rippling through engineering tools and services. Thereby a robust and stable process control system is obtained where the risk of the operation of the runtime system hanging or failing or a runtime service being blocked during reconfiguration is reduced.

While the invention has been described in connection with what is presently considered to be most practical and preferred embodiments, it is to be understood that the invention is not to be limited to the disclosed embodiments, but on the contrary, is intended to cover various modifications and equivalent arrangements.

The engineering directory service and source management service may for instance be combined into a combined engineering directory and source management service. Furthermore, instead of being separate from the engineering server, the source file store may be a part of it.

Therefore, the invention is only to be limited by the following claims.

## Claims

1. An engineering server (17) of an engineering system of a process control system (10) for providing configurations for real functions of a runtime system of the process control system (10),
said engineering server (17) comprising at least one processor (44) operable to provide a group of engineering services of an engineering services platform (61), said group of engineering services comprising, at least one engineering directory service (62) and at least one group of model services (66, 72), where each group of model services is associated with a corresponding engineering directory service,
where each engineering directory service (62) provides at least one object (64) of a type corresponding to a type of process control equipment and each model service (66, 72) provides a function operating on an object (64) provided by the corresponding engineering directory service (62) and allowing a user to configure the corresponding function,
wherein the model services (66, 72) and the engineering directory service (62) are realized as microservices and each model service (66, 72) is operative to communicate with the corresponding engineering directory service (62) via a corresponding point-to-point connection and to store configurations made by the user in a source file store (18) for being implemented as configurations of real functions in the runtime system operating on process control equipment.

2. The engineering server (17) according to claim 1, further comprising a deploy service (80) configured to deploy the configurations of the functions in the runtime system.

3. The engineering server (17) according to claim 1 or 2, wherein each model service (66, 72) has a local store (70, 76) and is operative to, upon starting of a function configuration session for a user, receive data from the source file store (18) and store said data in the local store (70, 76), store configurations made by the user during the function configuration session in the local store (70, 76) and transfer the content of the local store (70, 76) to the source file store (18) at the end of the function configuration session.

4. The engineering server (17) according to any previous claim, wherein a model service (66) in said group is operative to poll the engineering directory service (62) for changes made from other model services, receive such changes from the engineering directory service (62) and integrate them in the local store (70).

5. The engineering server (17) according to any previous claim, wherein there are several users (82A, 82B) and each user (82A, 82B)is provided with an own engineering directory service and associated own group of model services (84A, 84B).

6. The engineering server (17) according to claim 5, further comprising a global repository (86)and wherein there is one source file store (18, 18B) provided for each user and an engineering directory service is operative to store the configurations of the corresponding group of model services in the associated source file store (18A, 18B) and the configurations of the different users are merged into the global repository (86) before being implemented as configurations of real functions in the runtime system.

7. The engineering server (17) according to any previous claim, wherein the engineering directory service (62) is available during updates of model services (66, 72) in the corresponding group.

8. A method of providing configurations for real functions of a runtime system of a process control system (10), the process control system also comprising an engineering system, the method comprising providing (S100) a group of engineering services in an engineering system platform (61) of the engineering system,
said group of engineering services comprising at least one engineering directory service (62) and at least one group of model services (66, 72), where each group of model services is associated with a corresponding engineering directory service,
where each engineering directory service (62) provides at least one object (64) of a type corresponding to a type of process control equipment and each model service (66, 72) provides a function operating on an object (64) provided by the corresponding engineering directory service and allowing a user to configure the corresponding function,
wherein the model services (66, 72) and the engineering directory service (62) are realized as microservices and each model service (66, 72) is set to communicate with the corresponding engineering directory service (66) via a corresponding point-to-point connection and to store configurations made by the user in a source file store (18) for being implemented as configurations of real functions in the runtime system operating on process control equipment.

9. The method as claimed in claim 8, further comprising providing (S110) a deploy service (80) operable to deploy the configurations of the functions in the runtime system.

10. The method according to claim 8 or 9, wherein each model service (66, 72) has a local store (70, 76) and receives (S300), upon starting of a function configuration session (S200, S300) for a user, data from the source file store (18) and stores (S310) said data in the local store (70, 76), stores (S320) configurations made by the user during the function configuration session in the local store (70, 76) and transfers (S360) the content of the local store (70, 76) to the source file store (18) at the end of the function configuration session.

11. The method as claimed in any of claims 8 - 10, further comprising polling (S330) by a model service (66) in said group the engineering directory service (62) for changes made from other model services, receiving (S340) such changes from the engineering directory service (62) and integrating them in the local store (70).

12. A computer program for providing configurations for real functions of a runtime system of a process control system (10), said computer program comprising computer program code (48) which when executed by a processor (44) of an engineering server (17) according to claim 1 causes the engineering server (17) to perform the steps of the method as claimed in any of claims 8-11.

13. A computer program product for providing configurations for real functions of a runtime system of a process control system (10), the computer program product comprising a data carrier (51) with the computer program with computer program code (48) according to claim 12.

14. A process control system (10) comprising:
a runtime system comprising a first operator terminal (12), a process control server (16) and a controller (20), and
an engineering system comprising an engineering server (17) according to any of claims 1 - 7.

15. The process control system according to claim 14, wherein the engineering system comprises an engineering terminal (14) providing a number of engineering tools (56, 58, 60), each operative to cooperate with a corresponding engineering service (62, 66, 70) of the engineering server (17).
